# FASCICULE DE BREVET EUROPEEN

(11) **EP 0 941 970 B1**
(45) Date de publication et mention de la délivrance du brevet: **04.04.2007**
(21) Numéro de dépôt: 99400444.8
(22) Date de dépôt: 24.02.1999
(51) Int. Cl.: C02F 1/66, C02F 9/00, C02F 1/52, C02F 1/54

(54) **Utilisation d'anhydride carbonique dans un procédé de traitement d'effluents aquex**
Anwendung von Kohlendioxid in einer Abwasserbehandlung
Use of carbon dioxide in a waste water treatment

(30) Priorité: 09.03.1998 FR 9802829
(43) Date de publication de la demande: 15.09.1999
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: de Rigaud, Jean-Mathieu, 75017 Paris (FR)
(74) Mandataire: Vesin, Jacques

(56) Documents cités:
- EP-A- 0 451 434
- DE-A- 4 136 616
- US-A- 3 833 463
- PATENT ABSTRACTS OF JAPAN vol. 009, no. 066 (C-271), 26 mars 1985 & JP 59 199097 A (NIPPON KAGAKU KOGYO KK), 12 novembre 1984 -& DATABASE WPI Section Ch, Week 8451 Derwent Publications Ltd., London, GB; Class D15, AN 84-316109 XP002084317 "Treating chromium- and calcium-containing cement effluent - by adding carbon dioxide and ferrous salt and opt. coagulant" ((NIPC) NIPPON CHEM IND CO LTD), 12 novembre 1984
- PATENT ABSTRACTS OF JAPAN vol. 007, no. 195 (C-183), 25 août 1983 & JP 58 098185 A (MITSUBISHI JUKOGYO KK), 10 juin 1983 -& DATABASE WPI Section Ch, Week 8329 Derwent Publications Ltd., London, GB; Class D15, AN 83-714134 XP002084318 "Treating acid waste water from incinerator waste gas processing ..." ((MITO) MITSUBISHI HEAVY IND CO LTD) , 10 juin 1983
- DATABASE WPI Section Ch, Week 7850 Derwent Publications Ltd., London, GB; Class D15, AN 78-90138A XP002084319 "Increasind dehydrability of sludge sediment from effluent treatment - by coagulation, removing supernant liquor and bubbling in carbon dioxide" & JP 53 126764 A ((SAOK) SANYO KOKUSAKU PULP CO), 6 novembre 1978

## Description

La présente invention concerne le traitement d'effluents aqueux. Elle a plus précisément pour objet un perfectionnement à des procédés de traitement, selon l'art antérieur, de tels effluents aqueux. Ledit perfectionnement facilite l'élimination des matières en suspension et/ou matières colloïdales présentes au sein des effluents traités. Ces effluents, suspensions plus ou moins concentrées, peuvent notamment consister en des eaux de procédé, de l'industrie papetière par exemple, en des eaux usées, industrielles ou urbaines, voire en des eaux de rivière ou encore en des boues, notamment issues de telles eaux usées.

Les procédés de traitement de tels effluents visent à produire, selon le contexte, des effluents plus concentrés, des boues liquides ou des boues épaissies. Ils peuvent également viser à déposer des charges sur un substrat; plus généralement, à débarrasser ainsi d'au moins une partie de leur charges les effluents industriels concernés. Lesdits procédés comprennent généralement plusieurs étapes et font intervenir de grandes quantités de réactifs de traitement : réactifs de conditionnement chimique et agents antimousse, si nécessaire. Ces réactifs de conditionnement chimique du type sels minéraux ou polymères organiques de synthèse, connus de l'homme du métier, interviennent à titre de coagulant et/ou floculant. Ils facilitent l'agglomération des particules solides en suspension - particules de petites tailles, particules colloïdales - et, par voie de conséquence, la séparation ultérieure des phases solide et liquide par des traitements exerçant des actions essentiellement physiques (décantation, centrifugation, filtration, ...). En papeterie, au sein des eaux de procédé, ils améliorent l'agglomération et la fixation des charges (du type talc, kaolin ...) ou des pigments (organiques ou minéraux) sur le substrat cellulosique.

Les coûts en réactifs chimiques de ce type peuvent représenter plus de 50 % des frais d'exploitation d'une installation de traitement d'effluents aqueux, telle une station d'épuration d'eaux usées urbaines.

Le perfectionnement, proposé selon la présente invention, développé plus avant dans le présent texte, est notamment intéressant en ce que sa mise en oeuvre autorise une réduction substantielle des quantités de réactifs de traitement nécessaires et donc une économie du même ordre des frais d'exploitation du procédé.

On a, dans les demandes de brevet JP-A-51 124 042 et JP-A-59 010 388, décrit des procédés de traitement d'effluents aqueux au cours desquels un acide minéral est ajouté auxdits effluents dans le but de générer, en leur sein, du gaz carbonique. Ledit acide minéral consomme, par réaction chimique, des carbonates, présents dans l'effluent ou ajoutés à celui-ci, pour générer in situ ledit gaz carbonique. Le document JP-A-59 010 388 décrit le traitement d'effluents très basiques. Au sein de ceux-ci, l'acide est ajouté en une quantité telle que leur pH est amené à une valeur comprise entre 4 et 5.

Le gaz carbonique, ainsi généré in situ, par action d'un acide fort sur un matériau alcalin, exerce, en référence au phénomène physique de la flottation, une action bénéfique, purement mécanique. Cette action bénéfique repose sur l'action des bulles de gaz qui remontent en surface : action dite de flottation. Elle ne peut reposer sur une réelle action chimique dudit gaz qui, dans les conditions indiquées, ne peut se dissoudre dans l'effluent qu'en très faibles quantités.

On conçoit par ailleurs que l'action bénéfique dudit gaz est contrariée par les inconvénients qu'il y a, d'une part, à faire intervenir dans le procédé un acide fort et, d'autre part, à introduire, par le biais de l'addition dudit acide, dans l'effluent traité, des anions type sulfate, chlorure.

Le perfectionnement selon l'invention n'est pas basé sur l'action, au sein des effluents traités, d'un acide minéral, ni sur l'action mécanique d'un gaz. Il est basé sur l'action chimique de l'anhydride carbonique, en d'autres termes sur un dopage en bicarbonates et carbonates, de effluent traité. L'homme du métier comprendra aisément ceci à la lecture de ce qui suit.

La demanderesse propose donc l'utilisation de CO₂ dans l'original de traitement d'effluents aqueux plus ou moins concentrés, du type eaux de procédé, eaux usées, industrielles ou urbaines, et boues, notamment issues de ces eaux usées. De façon classique, ledit procédé comprend au moins une étape de séparation physique d'une phase liquide et d'une phase solide dispersée au sein de ladite phase liquide (par des procédés du type décantation, flottation, filtration ...) (une étape de ce type est mise en oeuvre sur l'effluent à traiter qui renferme une telle phase solide dispersée au sein d'une phase liquide et dans l'hypothèse où le procédé inclut plusieurs étapes de ce type, lesdites étapes de ce type, différentes de la première, sont mises en oeuvre sur une partie de l'effluent qui a subi les précédentes) et, en vue d'optimiser la mise en oeuvre et le rendement de cette étape de séparation, l'addition au sein des effluents traités (au moins une addition) de réactifs chimiques de coagulation et/ou floculation et éventuellement, si nécessaire, d'agents antimousse. De façon caractéristique, ledit procédé comprend aussi l'injection d'anhydride carbonique (CO₂) au sein des effluents traités, en une quantité suffisante pour leur conférer un pH inférieur à 7,8.

Cette injection d'anhydride carbonique constitue le perfectionnement au sens de l'invention dans la mesure où la demanderesse a montré son effet bénéfique sur l'élimination des matières en suspension et/ou des matières colloïdales présentes dans l'effluent traité, sur, plus généralement la séparation de phases liquide et solide dudit effluent.

Selon l'invention, ledit anhydride carbonique n'est pas généré in situ. Il n'est pas non plus injecté pour exercer un simple bullage. Il est injecté dans des conditions où il exerce une réelle action chimique, ladite action chimique se traduisant notamment par une baisse du pH de l'effluent. Pour exercer une telle action chimique, il est dissous dans l'effluent, il génère au sein de celui-ci des (bi)carbonates (bicarbonates et carbonates).

Par la présence de ces (bi)carbonates, la demanderesse explique, au moins en partie, les résultats surprenants qu'elle a observés lors de la mise en oeuvre de l'invention. Lesdits (bi)carbonates, en potentialisant l'action des agents chimiques de coagulation et/ou floculation et des agents antimousse, permettent une économie substantielle de ceux-ci. Lesdits résultats demeurent surprenants dans la mesure où les mêmes effets bénéfiques n'ont pas été obtenus avec l'addition de sulfates.

On note incidemment ici que l'injection de CO₂, préconisée dans le cadre de la présente invention, permet, outre l'économie de réactifs chimiques, d'empêcher la formation de struvite (Mg(NH₄)(PO₄),8H₂O), produit qui engendre des problèmes d'encrassement au niveau des réseaux. Selon l'art antérieur, pour atteindre ce but, on doit faire intervenir FeCl₃. L'injection de CO₂, selon l'invention, a également des incidences avantageuses au niveau d'une étape de déphosphatation, susceptible d'intervenir.

On a parlé d'une injection de CO₂ ; il convient d'entendre, de manière générale, au moins une injection de CO₂.

Avantageusement, ladite injection de CO₂ est mise en oeuvre avant ou en même temps que l'addition des réactifs chimiques de coagulation et/ou floculation et/ou agents antimousse. Selon des modes de mise en oeuvre avantageux du procédé de l'invention, l'addition d'agents antimousse est précédée d'une injection de CO₂ et/ou au moins une addition de réactifs chimiques de coagulation et/ou floculation est précédée d'une injection de CO₂.

On se propose ici de situer plus précisément l'invention dans son contexte. Ledit contexte est celui du traitement d'effluents :
- effluents aqueux dilués, que l'on souhaite simplement concentrer,
- effluents aqueux dilués, que l'on traite en vue d'obtenir des boues liquides,
- boues liquides que l'on traite en vue d'obtenir des boues épaissies,
- effluents aqueux dilués que l'on traite en vue d'obtenir des boues épaissies (on passe ici par l'intermédiaire de boues liquides),
- effluents aqueux chargés que l'on traite pour les débarrasser d'au moins une partie de leur charge, pour, par exemple, fixer lesdites charges sur un substrat.

Selon le cas de figure, on peut considérer que l'intervention du CO₂ selon l'invention, facilite l'élimination des matières en suspension et/ou matières colloïdales (qui constituent donc éventuellement des charges) présentes dans l'effluent en vue de leur récupération ultérieure ou en vue de les fixer sur un substrat.

Le traitement des effluents aqueux peut en tout état de cause se décliner selon plusieurs variantes qui comportent un nombre plus ou moins élevé d'étapes. Il peut se résumer à un traitement d'eaux, à un traitement de boues ou se décliner, d'amont en aval, pour l'obtention de boues épaissies à partir d'eaux ... Il comprend l'addition, au sein des effluents, avant leur soumission à des étapes visant à séparer une phase solide et une phase liquide (filtrat), de réactifs chimiques de floculation et/ou coagulation du type sels minéraux et/ou polymères organiques de synthèse. Ces réactifs sont familiers à l'homme du métier et peuvent notamment consister en des sels d'aluminium, tels le sulfate d'alumine (Al₂(SO₄)₃,18H₂O) et le chlorure d'aluminium (AlCl₃,6H₂O); des polymères d'aluminium, notamment des polyacrylates d'aluminium (PAC); des sels de fer, tels le chlorure ferrique (FeCl₃,6H₂O), le sulfate ferrique (Fe₂(SO₄)₃,9H₂O); des polyélectrolytes anioniques, tels des copolymères acrylamide-acrylate de haute masse moléculaire ; des polymères non ioniques, tels des polyacrylamides ; des polyélectrolytes cationiques, et notamment ceux dont les groupements cationiques sont des ammoniums quaternaires ou des sels d'amine...

Ledit traitement comprend aussi, si nécessaire, l'addition d'agents antimousse dans des effluents dilués.

De tels effluents dilués peuvent être préalablement neutralisés (de sorte que leur pH se situe entre 8 et 8,5) puis, si nécessaire, traités à l'aide d'agents antimousse, puis traités à l'aide de réactifs chimiques de coagulation et/ou floculation avant d'être décantés et filtrés. On obtient alors d'une part un filtrat et d'autre part soit des effluents plus concentrés, soit des boues liquides. Ces boues ou d'autres boues, obtenues par ailleurs, peuvent, après avoir été éventuellement soumises à une fermentation naturelle ou à une digestion bactérienne, être épaissies, en une ou plusieurs étapes au cours desquelles elles sont encore traitées à l'aide de réactifs chimiques de coagulation et/ou floculation.

Selon l'invention, on fait donc intervenir dans cette succession d'étapes, au moins une injection de CO₂.

Ladite injection peut se situer très en amont du procédé, notamment au niveau de la neutralisation des effluents si une telle neutralisation est mise en oeuvre.

Il n'est en effet pas exclu du cadre de l'invention que le CO₂ soit injecté en une quantité telle qu'il assure à la fois ladite neutralisation (descente du pH à une valeur d'environ 8-8,5) et son rôle d'agent chimique au sens de l'invention (qui porte ledit pH à une valeur inférieure à 7,8). Toutefois, on préfère généralement que la neutralisation des effluents, si elle est nécessaire, soit mise en oeuvre de façon classique, notamment par intervention d'un acide, et que l'anhydride carbonique intervienne après ladite neutralisation (après ledit acide).

Ainsi, dans le cadre d'une variante avantageuse de l'utilisation de l'invention, ladite injection de CO₂ est mise en oeuvre, en amont dudit procédé, avant ou pendant l'addition de réactifs chimiques de coagulation et/ou floculation et celle, éventuelle d'agents antimousse, après une éventuelle étape de neutralisation. Ledit CO₂ est ainsi injecté à des effluents liquides dont le pH est généralement compris entre 8 et 8,5 en vue d'abaisser ledit pH à une valeur inférieure à 7,8.

Dans l'hypothèse où des agents antimousse interviennent, ladite injection de CO₂ est avantageusement mise en oeuvre avant l'addition desdits agents antimousse. On a alors observé, comme indiqué précédemment, une économie substantielle de la quantité d'agents antimousse nécessaire à l'effet escompté. Dans une telle hypothèse, il n'est nullement exclu de mettre en oeuvre au moins une autre injection de CO₂ en aval du procédé, avant ou pendant l'addition de réactifs chimiques de coagulation et/ou floculation.

Dans l'hypothèse où il n'intervient pas d'agents antimousse, on prévoit également, avantageusement, au moins une injection de CO₂, avant l'addition de réactifs chimiques de coagulation et/ou floculation.

On comprend donc que l'addition d'agents antimousse est avantageusement précédée d'une injection de CO₂ et qu'en l'absence de l'intervention d'agents anti-mousse, au moins une addition de réactifs chimiques de coagulation et/ou floculation est avantageusement précédée d'une injection de CO₂. On prévoit, en fait, dans le cadre du procédé de l'invention, avantageusement, au moins une injection de CO₂ avant l'intervention d'agents antimousse et/ou celle de réactifs chimiques de coagulation et/ou floculation.

On peut aussi bien prévoir une unique injection de CO₂, avantageusement en amont de l'intervention de tout réactif chimique du type agents antimousse et réactifs chimiques de coagulation et/ou floculation qu'une pluralité d'injections de CO₂.

Ledit CO₂ est injecté aussi bien dans des effluents liquides dilués que des effluents liquides concentrés ou des boues, plus ou moins épaisses. Il peut intervenir, comme déjà indiqué, aussi bien dans le cadre de procédés de purification d'effluents aqueux que dans celui, plus général, de procédés industriels où l'on souhaite séparer une phase solide dispersée d'une phase liquide la contenant.

Ledit CO₂ peut être injecté sous forme liquide ou gazeuse. Il est avantageusement injecté sous forme gazeuse.

Ledit CO₂ peut être injecté dans des canalisations ou dans des bassins ou réacteurs. Il peut être injecté au travers de parois poreuses. Il est avantageusement injecté au travers de piquage(s) (d'au moins un piquage).

On a indiqué que ledit CO₂ est injecté en une quantité suffisante pour amener le pH de l'effluent dans lequel il est injecté à une valeur inférieure à 7,8. Avantageusement, il est injecté en une quantité suffisante pour amener ledit pH à une valeur comprise entre 6,4 et 7,5, encore plus avantageusement entre 6,6 et 7,3. On préconise généralement d'amener la valeur du pH autour de 6,8.

On précise encore ici que :
- lors du traitement de suspensions diluées (pour obtenir des suspensions plus concentrées et notamment des boues liquides, pour obtenir plus généralement une phase solide séparée d'une phase liquide), on préconise tout particulièrement l'injection de CO₂ avant l'(les) intervention(s) de réactifs chimiques de floculation et/ou coagulation du type sels minéraux et/ou polymères organiques de synthèse (voire avant l'intervention d'agents antimousse) ;
- lors du traitement de boues liquides (obtenues éventuellement directement à partir desdites suspensions diluées) pour générer des boues à plus fort taux de matières sèches, on préconise vivement l'injection de CO₂ avant l'(les) intervention(s) de réactifs chimiques de floculation et/ou coagulation du type sels minéraux et/ou polymères organiques de synthèse ; intervention(s) destinée(s) à épaissir ou (et) conditionner lesdites boues liquides en vue d'augmenter leur aptitude à la déshydratation. Lors du traitement desdites boues, on prévoit généralement deux étapes : une première étape qualifiée d'épaississement et une seconde étape dite de déshydratation mécanique. Le CO₂ intervient donc au niveau d'au moins l'une de ces deux étapes.

Comme cela n'aura pas échappé à l'homme du métier, l'utilisation de l'invention peut être mis en oeuvre, sans difficulté aucune, sur des installations existantes. Son intérêt économique est évident pour l'utilisateur : le remplacement partiel de réactifs de traitement des procédés de l'art antérieur, par de l'anhydride carbonique (CO₂), permet une réduction substantielle du coût desdits procédés, dans la mesure où le coût dudit anhydride carbonique (ajouté selon l'invention) est environ le tiers du coût des réactifs remplacés.

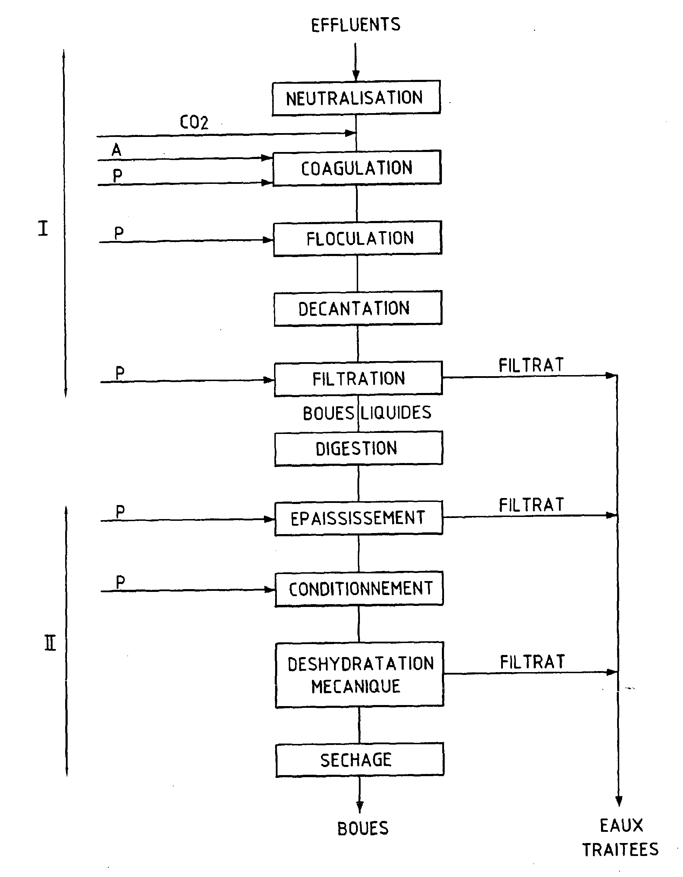

L'invention est maintenant décrite en référence à l'unique figure annexée. Ladite figure unique illustre de façon schématique une variante de mise en oeuvre du procédé employé dans l'invention. Il s'agit en fait d'un "flow-sheet" d'un procédé de traitement d'effluents aqueux (type eaux usées) qui incorpore le perfectionnement de l'invention.

Les effluents aqueux dilués traités sont tout d'abord neutralisés. Ensuite, dans un bassin dit de coagulation, ils sont mélangés à des agents antimousse (A) et à des polymères (P), réactifs de chimiques de coagulation et/ou floculation. Des polymères (P) interviennent également dans le bassin dit de coagulation. Les effluents ainsi conditionnés sont alors décantés puis filtrés. On fait intervenir des polymères (P) au niveau de la filtration. A l'issue de ladite filtration, on obtient d'une part un filtrat et d'autre part des boues liquides. Celles-ci sont alors soumises à l'action de bactéries dans un digesteur. A la sortie du digesteur, elles sont épaissies par passage dans une vis sans fin. A l'entrée de ladite vis en fin, on ajoute des polymères (P) de conditionnement chimique. Les boues ainsi épaissies sont encore conditionnées à l'aide de polymères (P) avant d'être soumises à une ultime étape de déshydratation mécanique. On obtient alors des boues épaissies.

On peut considérer que ledit procédé comporte deux étapes :
- une étape, I, de traitement d'effluents dilués,
- une étape, II, de traitement de boues liquides.

On précise ici que les polymères (P) qui interviennent tout au long dudit procédé ne sont pas forcément de même nature.

De façon caractéristique, selon l'invention, en aval de l'étape de neutralisation et en amont de l'intervention des agents antimousse et de la première intervention des polymères (P), on injecte dans l'effluent traité du CO₂. En aval de ladite injection, le pH de l'effluent est inférieur à 7,8.

On illustre enfin l'utilisation par l'exemple ci-après.

La demanderesse a mis en oeuvre le perfectionnement présentement revendiqué dans le cadre du traitement d'effluents aqueux d'une industrie papetière. Elle a quantitativement évalué les avantages dudit perfectionnement au niveau des premières étapes du procédé.

Les effluents traités - suspensions aqueuses diluées, principalement chargées en fibres de bois, à raison d'environ 10 g/l - sont amenés de l'usine dans un premier bassin où ils subissent un traitement antimousse. Ils sont ensuite transférés dans un second bassin, de coagulation. On termine alors leur préconditionnement, en y ajoutant, en ligne, des floculants. Ils sont ensuite ainsi préconditionnés, décantés puis filtrés pour générer des boues liquides. Lesdites boues sont, en aval, soumises à une digestion puis conditionnées avant de subir une déshydratation mécanique.

L'injection de CO₂ est mise en oeuvre sur la canalisation d'amenée des effluents de l'usine vers le bassin de traitement antimousse. Au sein de ladite canalisation d'un diamètre de 200 mm, l'effluent circule, à une pression de 2,5 bars, à un débit de 400 m³/h et son pH est compris entre 7,2 et 7,8. Le piquage dans ladite canalisation, pour l'injection du CO₂ est situé à 25 m en amont du bassin. Le CO₂ est injecté sous forme gazeuse à une pression de 4 bars. La quantité de CO₂ injecté est de 30 kg/h

Ladite injection de CO₂ est en fait pilotée par une mesure du pH de l'effluent au sortir du bassin de traitement antimousse ; pH que l'on stabilise autour de la valeur 6,9.

On a, dans ces conditions, pu diminuer, grâce à l'intervention du CO₂, la quantité d'agents antimousse nécessaire d'environ 30 % (en poids).

De la même façon :
- la quantité de coagulants (polyacrylates d'aluminium) qui intervient à l'entrée du bassin de coagulation, en aval du bassin de traitement antimousse, a pu être diminuée de 100 1/h à 50 l/h;
- la quantité de floculants (polymères organiques de synthèse cationiques) qui intervient, en ligne, en aval du bassin de coagulation, a pu elle aussi être diminuée d'environ 30 % (en poids).

Après l'injection des floculants, le pH de l'effluent est stabilisé à 7.

L'homme du métier aura saisi l'importance des économies qui peuvent être réalisées grâce à la mise en oeuvre du perfectionnement de l'invention.

On note qu'il a par ailleurs été observé, en aval, au niveau de la filière boues, une augmentation du rendement des presses à vis ("tassters").

## Revendications

1. Utilisation d'anhydride carbonique (CO₂) dans un procédé de traitement d'effluents aqueux plus ou moins concentrés, du type eaux de procédé, eaux usées, industrielles ou urbaines, eaux de rivière et boues, notamment issues de ces eaux usées, ledit procédé comprenant :
- au moins l'addition de réactifs chimiques de coagulation et/ou floculation et éventuellement d'agents anti-mousse,
- au moins une étape de séparation physique d'une phase liquide et d'une phase solide dispersée au sein de ladite phase liquide,
pour potentialiser l'action des agents chimiques de coagulation et/ou floculation et des agents anti-mousse, l'anhydride carbonique (CO₂)étant injecté dans lesdits effluents aqueux en une quantité suffisante pour leur conférer un pH inférieur à 7,8.

2. Utilisation selon la revendication 1, **caractérisée en ce que** l'injection d'anhydride carbonique est mise en oeuvre avant l'addition des réactifs chimiques de coagulation et/ou floculation et/ou des agents anti-mousse.

3. Utilisation selon la revendication 1, **caractérisée en ce que** l'injection d'anhydride carbonique est mise en oeuvre en même temps que l'addition des réactifs chimiques de coagulation et/ou floculation et/ou agents anti-mousse.

4. Utilisation selon l'une des revendications précédentes, **caractérisée en ce que** l'injection d'anhydride carbonique est mise en oeuvre après une étape de neutralisation.

5. Utilisation selon la revendication 4, **caractérisée en ce que** la neutralisation est mise en oeuvre par intervention d'un acide.

6. Utilisation selon l'une quelconque des revendications précédentes, **caractérisée en ce que** ledit CO₂ est injecté sous forme liquide ou gazeuse.

7. Utilisation selon l'une quelconque des revendications précédentes, **caractérisée en ce que** ledit CO₂ est injecté au travers d'au moins un piquage.

8. Utilisation selon l'une quelconque des revendications précédentes, **caractérisée en ce que** ledit CO₂ est injecté en une quantité telle qu'il abaisse le pH de l'effluent traité à une valeur comprise entre 6,4 et 7,5 avantageusement entre 6,6 et 7,3.

9. Utilisation selon la revendication 1, **caractérisée en ce que**, lors du traitement de suspensions diluées, ledit CO₂ est injecté avant l'(les) intervention(s) des agents chimiques de floculation et/ou coagulation du type sels minéraux et/ou polymères organiques de synthèse.

## Claims

1. Use of carbon dioxide (CO₂) in a process for treating aqueous effluents that are concentrated to a greater or lesser extent, process waters such as industrial or urban waste waters, river waters and sludges, especially in sludges derived from these waste waters, said process comprising:
- at least the addition of chemical coagulation and/or flocculation reagents and possibly antifoaming agents,
- at least one step of physical separation of a liquid phase and of a solid phase dispersed within said liquid phase,
for potentiating the action of the chemical coagulation and/or flocculation agents and the antifoaming agents, the carbon dioxide (CO₂) being injected into said aqueous effluents in a sufficient quantity to give them a pH below 7.8.

2. Use according to Claim 1, **characterized in that** the injection of carbon dioxide is carried out before the addition of the chemical coagulation and/or flocculation reagents and/or the antifoaming agents.

3. Use according to Claim 1, **characterized in that** the injection of carbon dioxide is carried out at the same time as the addition of the chemical coagulation and/or flocculation reagents and/or antifoaming agents.

4. Use according to one of the preceding claims, **characterized in that** the injection of carbon dioxide is carried out after a neutralization step.

5. Use according to Claim 4, **characterized in that** the neutralization is carried out by introduction of an acid.

6. Use according to any one of the preceding claim, **characterized in that** said CO₂ is injected in liquid or gas form.

7. Use according to any one of the preceding claims, **characterized in that** said CO₂ is injected through at least one branch connection.

8. Use according to any one of the preceding claims, **characterized in that** said CO₂ is injected in a quantity such that it lowers the pH of the treated effluent to a value between 6.4 and 7.5, advantageously between 6.6 and 7.3.

9. Use according to Claim 1, **characterized in that** during the treatment of dilute suspensions said CO₂ is injected before the introduction(s) of the chemical flocculation and/or coagulation agents such as mineral salts and/or synthetic organic polymers.

## Patentansprüche

1. Verwendung von Kohlendioxid (CO₂) in einem Verfahren zur Behandlung von mehr oder weniger konzentrierten Abwässern des Typs Prozesswasser, kommunales oder industrielles Abwasser und Flusswasser sowie von Schlämmen, insbesondere solchen aus diesen Abwässern, wobei das Verfahren Folgendes umfasst:
- mindestens die Zugabe von chemischen Reagenzien zur Koagulation und/oder Flockung sowie möglicherweise von Schaumverhütern,
- mindestens einen Schritt zur physikalischen Trennung einer flüssigen Phase und einer festen Phase, welche in der flüssigen Phase dispergiert ist,
und dazu dient, die Wirkung der chemischen Mittel zur Koagulation und/oder Flockung sowie der Schaumverhüter zu verstärken, wobei das Kohlendioxid (CO₂) den Abwässern in einer Menge zugesetzt wird, die ausreicht, um ihnen einen pH-Wert von weniger als 7,8 zu verleihen.

2. Verwendung gemäß dem Anspruch 1, **dadurch gekennzeichnet, dass** der Zusatz des Kohlendioxids vor der Zugabe der chemischen Reagenzien zur Koagulation und/oder Flockung und/oder der Zugabe der Schaumverhüter erfolgt.

3. Verwendung gemäß dem Anspruch 1, **dadurch gekennzeichnet, dass** der Zusatz des Kohlendioxids zur gleichen Zeit wie die Zugabe der chemischen Reagenzien zur Koagulation und/oder Flockung und/oder die Zugabe der Schaumverhüter erfolgt.

4. Verwendung gemäß einem der vorhergehenden Ansprüche, **dadurch gekennzeichnet, dass** der Zusatz des Kohlendioxids nach einem Neutralisierungsschritt erfolgt.

5. Verwendung gemäß dem Anspruch 4, **dadurch gekennzeichnet, dass** die Neutralisierung mittels einer Säure erfolgt.

6. Verwendung gemäß einem beliebigen der vorhergehenden Ansprüche, **dadurch gekennzeichnet, dass** das CO₂ in flüssigem oder in gasförmigem Zustand zugesetzt wird.

7. Verwendung gemäß einem beliebigen der vorhergehenden Ansprüche, **dadurch gekennzeichnet, dass** das CO₂ über mindestens eine Anschlussleitung zugesetzt wird.

8. Verwendung gemäß einem beliebigen der vorhergehenden Ansprüche, "**dadurch gekennzeichnet, dass** das CO₂ in einer solchen Menge zugesetzt wird, dass der pH-Wert des behandelten Abwassers, auf einen Wert zwischen 6,4 und 7,5, vorteilhafterweise zwischen 6,6 und 7,3, abgesenkt wird.

9. Verwendung gemäß dem Anspruch 1, **dadurch gekennzeichnet, dass** im Rahmen der Behandlung von verdünnten Suspensionen der Zusatz von CO₂ vor der/n Zugabe/n von chemischen Mitteln zur Flockung und/oder Koagulation des Typs Mineralsalze und/oder synthetische organische Polymere erfolgt.
